(19) Europäisches Patentamt
European Patent Office
Office européen des brevets

(11) EP 2 796 436 A1

(12) # EUROPÄISCHE PATENTANMELDUNG

(43) Veröffentlichungstag:
**29.10.2014 Patentblatt 2014/44**

(51) Int Cl.:
***C04B 28/14*** *(2006.01)*

(21) Anmeldenummer: **13165467.5**

(22) Anmeldetag: **26.04.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **BASF Construction Solutions GmbH
83308 Trostberg (DE)**

(72) Erfinder: **Die Erfindernennung liegt noch nicht vor**

(74) Vertreter: **Reitstötter Kinzebach
Patentanwälte
Sternwartstrasse 4
81679 München (DE)**

(54) **Verfahren zur Behandlung von Gips**

(57) Die Erfindung betrifft ein Verfahren zur Behandlung von Gips, wobei man den Gips mit einem Ketendimer in Kontakt bringt. Die Erfindung betrifft außerdem Gips, der nach diesem Verfahren erhalten wird und die Verwendung des nach diesem Verfahren erhaltenen Gips zur Herstellung gipshaltiger Fertigbauteile.

EP 2 796 436 A1

## Beschreibung

Die vorliegende Erfindung betrifft ein Verfahren zur Behandlung von Gips, nach diesem Verfahren behandelten Gips und die Verwendung des behandelten Gipses in gipshaltigen Baustoffen.

In der Bauindustrie werden vielerlei verschiedene gipshaltige Baustoffe verwendet. Die gipshaltigen Baustoffe umfassen Gipse, wie Stuckgipse, Mörtelgipse, Maschinengipsputze, Putzgipse, Haftgipse, Fugengipse, Spachtelgipse, Stuckgipse, Isoliergipse, Estrichgipse, Fertigputzgipse und Marmorgipse. Die gipshaltigen Baustoffe umfassen außerdem gipshaltige Fertigbauteile, wie Gipskartonplatten, Gipsfaserplatten, gipshaltige Wandbauplatten und gipshaltige Formkörper.

Viele gipshaltige Baustoffe sind unter Einwirkung von Wasser nur bedingt beständig. Dies ist auf die Wasserlöslichkeit des abgebundenen Gipses zurückzuführen. Gips wird deshalb im Außenbereich in imprägnierter Form verwendet. Im Innenbereich werden in Nasszellen, wie Bädern oder Kellern, bevorzugt andere Baustoffe verwendet.

Technisch wird die Beständigkeit gipshaltiger Baustoffe gegenüber Wasser durch Hydrophobierung erhöht. Dabei wird der gipshaltige Baustoff oder dessen Oberfläche mit einem Hydrophobierungsmittel behandelt. Als Hydrophobierungsmittel wurden Wachsemulsionen beschrieben, die zusätzlich Polyvinylalkohol (US 2010/0116406 A1, US 3935021, US 5437722) oder Styrol-(Meth)Acrylsäure-Copolymere (WO 00/63294 A1) oder Kombinationen anionischer und nicht-ionischer oberflächenaktiver Stoffe (WO 99/35103 A1) enthalten können. Als Hydrophobierungsmittel wurden ferner wasserabweisende Organosiliciumverbindungen (DE 1223287, US 5814411) beschrieben.

Auch Verfahren zur gezielten Hydrophobierung der Faserstoffe, die in gipshaltige Fertigbauteile eingearbeitet werden, wurden offenbart. Als Hydrophobierungsmittel wurden in diesem Zusammenhang in WO 2010/112197 insbesondere Ketendimere, Alkyl- oder Alkylenbernsteinsäurederivate, polymerbasierte Leimungsmittel, Alaune und siliciumorganische Verbindungen und in WO 02/28795 insbesondere Ketendimere, Alkenylbernsteinsäureanhydride und Stearinsäuren beschrieben.

Die im Stand der Technik beschriebenen Mittel weisen Nachteile auf. So sind einige Hydrophobierungsmittel nicht dosierbar, wie etwa Wachse, andere sind auslaugungsempfindlich, wie etwa Fettsäure-Derivate. Anhydrid-gebundene Fassadenbaustoffe werden mit pulverförmigen Fettsäure-Salzen wie Oleaten oder Stearaten hydrophob eingestellt. Jedoch werden die Fettsäure-Salze insbesondere unter dem Einfluss von Schlagregen und Frost ausgelaugt und abgebaut.

Wenn Gips zur Einstellung der gewünschten Hydrophobizität eine große Menge Hydrophobierungsmittel zugesetzt werden muss, kann dies andere Produkteigenschaften, wie die Festigkeit, beeinträchtigen. Die gewünschte Hydrophobizität kann dann nicht unabhängig von anderen Produkteigenschaften eingestellt werden.

Der vorliegenden Erfindung liegt daher die Aufgabe zugrunde, ein Verfahren zur Behandlung von Gips bereitzustellen, das eine Erhöhung der Hydrophobizität von Gips ermöglicht. Ferner liegt der vorliegenden Erfindung die Aufgabe zu Grunde, ein Verfahren zur Behandlung von Gips bereitzustellen, das die Erhöhung der Hydrophobizität von Gips unter Einsatz möglichst geringer Mengen Hydrophobierungsmittels ermöglicht. Der vorliegenden Erfindung liegt auch die Aufgabe zu Grunde, einen Gips bereitzustellen, der unter Einwirkung von Feuchtigkeit nur geringe Mengen Wasser adsorbiert. Insbesondere liegen der vorliegenden Erfindung auch die Aufgaben zu Grunde, einen hydrophobierten Gips bereitzustellen, der hohe Festigkeit besitzt und der zur Herstellung von gipshaltigen Fertigbauteilen verwendet werden kann.

Überraschenderweise wurde gefunden, dass diese Aufgaben durch ein Verfahren zur Behandlung von Gips gelöst werden, wobei man den Gips mit einem Ketendimer in Kontakt bringt.

Die Erfindung betrifft somit ein Verfahren zur Behandlung von Gips. Ausführungsformen der Erfindung sind:

1. Verfahren zur Behandlung von Gips, wobei man den Gips mit einem Ketendimer der Formel (I),

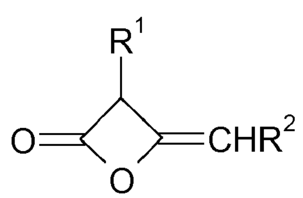

(I)

und/oder der Formel (II)

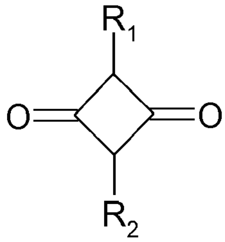

(II)

in Kontakt bringt, worin $R^1$ und $R^2$ für gleiche oder unterschiedliche Kohlenwasserstoffreste stehen, die 12 bis 24 Kohlenstoffatome enthalten.

2. Verfahren nach Ausführungsform 1, wobei die Kohlenwasserstoffreste ausgewählt sind unter verzweigtem und unverzweigtem $C_{12}$-$C_{24}$-Alkyl oder $C_{12}$-$C_{24}$-Alkenyl.

3. Verfahren nach Ausführungsform 1 oder 2, wobei die Kohlenwasserstoffreste ausgewählt sind unter verzweigtem und unverzweigtem $C_{12}$-$C_{24}$-Alkyl, insbesondere verzweigtem und unverzweigtem $C_{14}$-$C_{20}$-Alkyl und besonders bevorzugt verzweigtem und unverzweigtem $C_{16}$-$C_{18}$-Alkyl, wie verzweigtem und unverzweigtem $C_{16}$-Alkyl und verzweigtem und unverzweigtem $C_{18}$-Alkyl.

4. Verfahren nach einer der vorhergehenden Ausführungsformen, wobei das Ketendimer in Form einer wässrigen Dispersion(Ketendimer-Dispersion) zur Anwendung kommt.

5. Verfahren nach Ausführungsform 4, wobei der Gips in fester Form oder in Form einer wässrigen Suspension mit der Ketendimer-Dispersion in Kontakt gebracht wird.

6. Verfahren nach einer der Ausführungsformen 4 oder 5, wobei die Ketendimer-Dispersion durch ein Schutzkolloid stabilisiert ist.

7. Verfahren nach Ausführungsform 6, wobei das Schutzkolloid anionisch, kationisch oder amphoter ist.

8. Verfahren nach Ausführungsform 6 oder 7, wobei das Schutzkolloid ausgewählt ist unter synthetischen, natürlichen und modifizierten natürlichen Polymeren.

9. Verfahren nach einer der Ausführungsformen 6 bis 8, wobei das Schutzkolloid ein nichtionisches, anionisches oder kationisches Polysaccharid ist, wobei das anionische Polysaccharid durch Carboxylgruppen und das kationische Polysaccharid durch Ammonium-Struktureinheiten modifiziert ist.

10. Verfahren nach Ausführungsform 9, wobei das Schutzkolloid eine Stärke oder eine Cellulose ist.

11. Verfahren nach Ausführungsform 10, wobei das Schutzkolloid eine Kartoffelstärke, Tapiokastärke, Reisstärke, Weizenstärke, Maisstärke, Sorghumstärke und/oder Erbsenstärke ist, die durch Ammonium-Struktureinheiten modifiziert ist.

12. Verfahren nach Ausführungsform 10, wobei das Schutzkolloid eine Cellulose ist, die durch Ammonium-Struktureinheiten modifiziert ist.

13. Verfahren nach einer der Ausführungsformen 9 bis 12, wobei die Ammonium-Struktureinheiten gleich oder verschieden sind und der Formel (IIIa) und/oder der Formel (IIIb) entsprechen,

$-A-NR^3R^4$ (IIIa)

$$-A-\overset{\oplus}{N}R^3R^4R^5$$

(IIIb)

worin

A für verzweigtes oder unverzweigtes $C_1$-$C_4$-Alkylen steht, das gegebenenfalls durch eine oder mehrere Hydroxyl- oder Phenylgruppen substituiert ist; oder
A für $C_1$-$C_3$-Alkylen-Phenylen, Phenylen-$C_1$-$C_3$-Alkylen oder $C_1$-$C_3$-Alkylen-Phenylen-$C_1$-$C_3$-Alkylen steht, das an der Alkylengruppe gegebenenfalls durch eine oder mehrere Hydroxylgruppen substituiert ist; und
$R^3$, $R^4$ und $R^5$ unabhängig voneinander für verzweigtes oder unverzweigtes $C_1$-$C_4$-Alkyl oder $C_2$-$C_4$-Hydroxyalkyl stehen und wobei $R^5$ auch für H stehen kann.

14. Verfahren nach Ausführungsform 13, wobei die Ammonium-Struktureinheiten gleich oder verschieden sind und der Formel (IIIb) entsprechen, worin
A für $-CH_2-CHOH-CH_2-$, $-CH_2-CH(CH_2OH)-$ oder $-CH_2-CH_2-$ steht; und
$R^3$, $R^4$ und $R^5$ unabhängig voneinander für Methyl oder Ethyl stehen.

15. Verfahren nach einer der Ausführungsformen 9 bis 14, wobei die Ammonium-Struktureinheiten der Formel (IV)

$$-CH_2-CHOH-CH_2-\overset{\oplus}{N}(Me)_3$$

(IV)

entsprechen.

16. Verfahren nach einer der Ausführungsformen 9 bis 15, worin der mittlere Substitutionsgrad S, der sich nach Gleichung (A) berechnet:

$$S = N_{Am}/N_{Sac} \qquad (A)$$

worin

$N_{Am}$ für die Summe steht, die durch Addition der mittleren Zahl der Amino-Struktureinheiten pro Polysaccharidmolekül mit der mittleren Zahl der Ammonium-Struktureinheiten pro Polysaccharidmolekül gebildet wird; und
$N_{Sac}$ für die mittlere Zahl der Monosaccharid-Struktureinheiten pro Polysaccharidmolekül steht;

0,01 bis 0,5, vorzugsweise 0,1 bis 0,4 und insbesondere 0,2 bis 0,3, beträgt.

17. Verfahren nach einer der Ausführungsformen 4 bis 16, wobei die wässrige Dispersion 1 bis 40 Gew.-%, vorzugsweise 5 bis 30 Gew.-%, insbesondere 10 bis 25 Gew.-%, Ketendimer enthält.

18. Verfahren nach einer der Ausführungsformen 4 bis 17, wobei die wässrige Ketendimer-Dispersion 2 bis 50 Gew.-%, vorzugsweise 4 bis 30 Gew.-%, Aluminiumsulfat, bezogen auf das Ketendimer, umfasst.

19. Verfahren nach einer der Ausführungsformen 4 bis 18, wobei die wässrige Ketendimer-Dispersion zusätzlich Ligninsulfonsäure und/oder ein Kondensationsprodukt aus Naphthalinsulfonsäure und Formaldehyd enthält, wobei die Sulfonsäuregruppen gegebenenfalls teilweise in protonierter und teilweise in deprotonierter Form vorliegen können.

20. Verfahren nach einer der Ausführungsformen 4 bis 19, wobei die wässrige Ketendimer-Dispersion einen pH-Wert im Bereich von 2 bis 4 aufweist.

21. Verfahren nach einer der Ausführungsformen 4 bis 20, wobei die disperse Phase der wässrigen Ketendimer-Dispersion einen mittleren Durchmesser von weniger als 10 $\mu$m aufweist.

22. Verfahren nach einer der Ausführungsformen 4 bis 21, wobei die wässrige Ketendimer-Dispersion ein organisches Lösungsmittel umfasst.

23. Verfahren nach einer der vorhergehenden Ausführungsformen, wobei man 0,02 bis 4, vorzugsweise 0,0,05 bis 3, insbesondere 0,1 bis 2 Gew.-% des Ketendimers einsetzt, bezogen auf die Masse des trockenen Gipses.

24. Verfahren nach einer der vorhergehenden Ausführungsformen, wobei man außerdem einen oder mehrere Additive zugibt, die ausgewählt sind unter Celluloseethern, Löschkalk, mineralischen Additiven, Aggregaten mit geringer Dichte, Fasern, Beschleunigern, Verdickungsmitteln, Verzögerern, Luftoprenbildnern, Schäumungsmitteln, Antischaumadditiven, Quellmitteln, Füllstoffen, Polyacrylaten, Dispersionsmitteln, Fließmitteln, Superabsorbern und Stabilisatoren.

25. Verfahren nach einer der vorhergehenden Ausführungsformen, wobei der Gips ausgewählt ist unter α-Halbhydrat, α/β-Halbhydrat, β-Halbhydrat, natürlichem Anhydrit, synthetischem Anhydrit, aus der Rauchgasentschwefelung erhaltenem Anhydrit, und/oder Mischungen von zwei oder mehreren davon.

26. Verfahren nach Ausführungsform 25, wobei der Gips ausgewählt ist unter β-Halbhydrat, aus der Rauchgasentschwefelung erhaltenem Anhydrit und/oder deren Mischungen.

27. Verfahren nach einer der vorhergehenden Ausführungsformen zur Behandlung von Stuckgips, Mörtelgips, Maschinengipsputz, Putzgips, Haftgips, Fugengips, Spachtelgips, Stuckgips, Isoliergips, Estrichgips, Fertigputzgips und Marmorgips.

28. Verfahren nach einer der vorhergehenden Ausführungsformen, wobei man den Gips zur Herstellung eines verarbeitungsbereiten Gipses am Ort der Verarbeitung mit dem Ketendimer vereinigt.

29. Gips, erhältlich nach dem Verfahren nach einer der vorhergehenden Ausführungsformen.

30. Gipshaltige Masse, umfassend den Gips nach Ausführungsform 29.

31. Fertigbauteile, umfassend den Gips nach Ausführungsform 29 oder die gipshaltige Masse nach Ausführungsform 30.

32. Verwendung von Gips nach Ausführungsform 29 oder der gipshaltigen Masse nach Ausführungsform 30 zur Herstellung gipshaltiger Fertigbauteile.

33. Verwendung nach Ausführungsform 32, wobei die gipshaltigen Fertigbauteile ausgewählt sind unter Gipskartonplatten, Gipsfaserplatten, gipshaltigen Wandbauplatten und gipshaltigen Formkörpern.

34. Verwendung nach Ausführungsform 32 oder 33, wobei Fasern oder eine faserhaltige Komponente in die gipshaltigen Fertigbauteile eingearbeitet werden.

35. Verwendung nach Ausführungsform 34, wobei die faserhaltige Komponente ein Papier oder ein Karton ist.

36. Verwendung nach Ausführungsform 34, wobei die faserhaltige Komponente an zumindest einer der Oberflächen der gipshaltigen Fertigbauteile aufgebracht oder parallel zu zumindest einer der Oberflächen in die gipshaltigen Fertigbauteile eingearbeitet wird.

37. Verwendung nach einer der Ausführungsformen 32 bis 35, wobei die faserhaltige Komponente netzartig angeordnete makroskopische Fasern oder flächig verteilte mikroskopische Fasern umfasst.

38. Verwendung nach einer der Ausführungsformen 34 bis 37, wobei die Fasern Cellulosefasern sind und die faserhaltige Komponente Cellulosefasern umfasst.

39. Verwendung von Gips nach einer der Ausführungsformen 32 bis 38 zur Herstellung von gipshaltigen Formkörpern, die unter Platten, Stäben, und Rohren ausgewählt sind.

40. Verfahren nach einer der Ausführungsformen 1 bis 28, wobei der mit dem Ketendimer behandelte Gips einer Wärmebehandlung unterzogen wird.

41. Verfahren nach Ausführungsform 25, wobei die Wärmebehandlung bei einer Temperatur im Bereich von 40 bis

110 °C, insbesondere 50 bis 100 °C und bevorzugt 60 bis 90 °C, erfolgt.

Die Erfindung betrifft ein Verfahren zur Behandlung von Gips, wobei man den Gips mit einem Ketendimer der Formel (I),

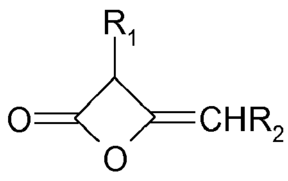

(I)

und/oder der Formel (II)

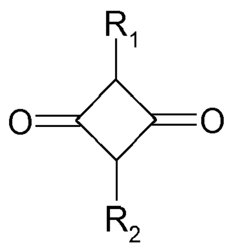

(II)

in Kontakt bringt, worin $R_1$ und $R_2$ für gleiche oder unterschiedliche Kohlenwasserstoffreste stehen, die 10 bis 24 Kohlenstoffatome enthalten. Die Kohlenwasserstoffreste sind bevorzugt unter verzweigtem und unverzweigtem $C_{12}$-$C_{24}$-Alkyl oder $C_{12}$-$C_{24}$-Alkenyl; weiterhin bevorzugt unter verzweigtem und unverzweigtem $C_{12}$-$C_{24}$-Alkyl; und besonders bevorzugt unter verzweigtem und unverzweigtem $C_{14}$-$C_{20}$-Alkyl ausgewählt. Ganz besonders bevorzugt sind die Kohlenwasserstoffreste unter verzweigtem und unverzweigtem $C_{14}$-, $C_{15}$-, $C_{16}$- und $C_{18}$-Alkyl ausgewählt. Unter "Alkenyl" sind verzweigte und unverzweigte, ethylenisch ungesättigte aliphatische Kohlenwasserstoffe mit einer, zwei oder drei Doppelbindungen zu verstehen.

Unter dem Ausdruck "Gips" ist insbesondere ein calciumsulfathaltiges Bindemittel zu verstehen, das in der Lage ist, Calciumsulfat-Dihydrat zu bilden. Das calciumsulfathaltige Bindemittel ist insbesondere ausgewählt unter $\alpha$-Halbhydrat, $\alpha$/$\beta$-Halbhydrat, $\beta$-Halbhydrat (synthetisches oder aus natürlichen Quellen gewonnenes $\beta$-Halbhydrat), natürlichem Anhydrit, synthetischem Anhydrit, aus der Rauchgasentschwefelung erhaltenem Anhydrit, und/oder Mischungen zweier oder mehrerer davon; vorzugsweise unter $\beta$-Halbhydrat (insbesondere aus natürlichen Quellen gewonnenes $\beta$-Halbhydrat), aus der Rauchgasentschwefelung erhaltenem Anhydrit und/oder deren Mischungen. Unter dem Ausdruck "Gips" ist hier aber auch das Dihydrat zu verstehen, da das Alkylketendimer zur Hydrophobierung auch auf die Oberfläche von bereits abgebundenem Gips aufgebracht werden kann. Unter dem Ausdruck "Gips" ist hier auch ein Gemisch des calciumsulfathaltigen Bindemittels mit anderen Komponenten, insbesondere Komponenten für die Herstellung von gipshaltigen Fertigbauteilen, zu verstehen.

Bevorzugt bringt man den Gips mit dem Ketendimer in Anwesenheit von Wasser in Kontakt. Besonders bevorzugt kommt dabei das Ketendimer in Form einer wässrigen Dispersion, die im Folgenden auch als Ketendimer-Dispersion bezeichnet wird, zur Anwendung. Dabei kann der Gips in fester Form oder in Form einer wässrigen Suspension mit der Ketendimer-Dispersion in Kontakt gebracht werden. Zweckmässigerweise wird der Gips in fester Form mit der Ketendimersuspension vermischt, z.B. in die wässrige Ketendimerdispersion eingetragen. Wenn der Gips in Form einer wässrigen Suspension zur Anwendung kommt, wird die Ketendimer-Dispersion zweckmässigerweise in die Gipssuspension eingetragen. Das Eintragen der Ketendimer-Dispersion erfolgt dabei innerhalb einer Zeitspanne von bis zu einer Minute nach der Zubereitung der Gipssuspension. Die Mengen an Wasser werden so gewählt, dass man nach dem in Kontaktbringen von Ketendimer und Gips einen gebrauchsfertigen Gipsbrei erhält. Um eine gleichmäßige Verteilung des Ketendimers im Gips zu gewährleisten, wird mit üblichen Vorrichtungen, beispielsweise Rührvorrichtungen, wie Hobart-Mischer, homogenisiert. Die Ketendimersuspension kann auch auf die Oberfläche von bereits abgebundenem Gips (Calciumsulfat-Dihydrat) aufgebracht werden, beispielsweise durch Aufsprühen oder Aufstreichen.

Das Ketendimer wird durch Dimerisierung von Ketenen erhalten. Die Ketene werden beispielsweise durch Umsetzung von Carbonsäurechloriden mit tertiären Aminen hergestellt. Von technischer Bedeutung sind insbesondere

Carbonsäurechloride, die durch Chlorierung von natürlich vorkommenden Fettsäuren oder deren Gemischen erhältlich sind, z. B. Säurechloride auf Basis von Fettsäuren, die aus Kokosöl, Tallöl, Rizinusöl, Olivenöl, Rindertalg oder Palmkernfett gewonnen werden. Typische Beispiele für Carbonsäurechloride sind Myristinsäurechlorid, Palmitinsäurechlorid, Stearinsäurechlorid, Ölsäurechlorid, Behensäurechlorid und Isostearinsäurechlorid. Die Umsetzung der Carbonsäurechloride mit den tertiären Aminen wird mit besonderem Vorteil in Abwesenheit von Lösemitteln unter intensivem Mischen bei Temperaturen von 65 bis 150°C nach dem aus der EP-A 1 453 821 bekannten Verfahren durchgeführt.

Die erfindungsgemäße Ketendimer-Dispersion ist durch ein Dispergiermittel, vorzugsweise durch ein Schutzkolloid, stabilisiert. Das Schutzkolloid kann nicht-ionisch, anionisch, kationisch oder amphoter sein und ist insbesondere ausgewählt unter synthetischen, natürlichen und modifizierten natürlichen Polymeren.

Beispiele für geeignete nicht-ionische Schutzkolloide sind Polyvinylalkohol, Hydroxypropylcellulose oder Hydroxypropylmethylcellulose.

Beispiele für geeignete anionische Schutzkolloide sind Polyacrylate, Carboxymethylcellulose, Pektine oder Alginate.

Beispiele für geeignete amphotere Schutzkolloide sind Proteine, wie Gelatine.

Beispiele für kationische Schutzkolloide sind Polyvinylamine, Polydiallyldimethylammoniumchlorid, Copolymere aus Acrylamid und Trimethylammoniumethylacrylat, Poly(benzyldimethylammoniumethylmethacrylat) und kationische Polysaccharide, wie kationische Stärken und kationische Cellulosen. Bevorzugt sind Polysaccharide, die durch Ammonium-Struktureinheiten modifiziert sind. Besonders bevorzugt setzt man die genannten nicht-ionischen oder anionischen Schutzkolloide ein. Bevorzugte kationische Schutzkolloide sind Stärke oder Cellulose, die durch Ammonium-Struktureinheiten modifiziert ist und im Folgenden als kationische Stärke oder kationische Cellulose bezeichnet wird. Als kationische Stärke und kationische Cellulose kommen sämtliche wasserlösliche Stärken und wasserlöslichen Cellulosen in Betracht, die als kationische Gruppe eine Aminogruppe und/oder Ammoniumgruppe aufweisen. Solche Stärken sind im Handel erhältlich. Sie werden z. B. durch Umsetzung von nativer Stärke mit Verbindungen erhalten, die tertiäre oder quaternäre Stickstoffatome aufweisen wie Alkylaminoalkylepoxide oder Alkylaminoalkylchloride. Beispiele für solche Verbindungen sind 3-Chlor-2-hydroxypropyltrimethylammoniumchlorid und Glycidyltrimethylammoniumchlorid.

Bevorzugte kationische Stärken weisen Ammonium-Struktureinheiten auf, die gleich oder verschieden sind und der Formel (IIIa) und/oder der Formel (IIIb) entsprechen,

$$-A\text{-}NR^3R^4 \qquad \text{(IIIa)}$$

$$-A\text{-}\overset{\oplus}{N}R^3R^4R^5$$

(IIIb)

worin

A für verzweigtes oder unverzweigtes $C_1$-$C_4$-Alkylen steht, das gegebenenfalls durch eine oder mehrere Hydroxyl- oder Phenylgruppen substituiert ist; oder
A für $C_1$-$C_3$-Alkylen-Phenylen, Phenylen-$C_1$-$C_3$-Alkylen oder $C_1$-$C_3$-Alkylen-Phenylen-$C_1$-$C_3$-Alkylen steht, das gegebenenfalls durch eine oder mehrere Hydroxylgruppen substituiert ist; und
$R^3$, $R^4$ und $R^5$ unabhängig voneinander für verzweigtes oder unverzweigtes $C_1$-$C_4$-Alkyl oder $C_2$-$C_4$-Hydroxyalkyl stehen, wobei $R^5$ auch für H stehen kann.

Bevorzugt sind die Ammonium-Struktureinheiten, die gleich oder verschieden sind und der Formel (IIIb) entsprechen, worin

A für $-CH_2$-CHOH-$CH_2$-, $-CH_2$-CH($CH_2$OH)- oder $-CH_2$-$CH_2$-; und
$R^3$, $R^4$ und $R^5$ unabhängig voneinander für Methyl oder Ethyl steht.

In einer bevorzugten Ausführungsform entsprechen die Ammonium-Struktureinheiten der Formel (IV).

$$-CH_2\text{-}CHOH\text{-}CH_2\text{-}\overset{\oplus}{N}(Me)_3$$

(IV)

Eine kationische Stärke oder kationische Cellulose kann auch eine kationisierte abgebaute Stärke oder Cellulose sein. Diese sind dadurch erhältlich, dass man eine native Stärke oder Cellulose zunächst einem Abbau unterwirft, um das Molekulargewicht der Stärke oder der Cellulose zu verringern, und die abgebaute Stärke oder Cellulose anschließend kationisiert. Der Abbau kann oxidativ, thermisch, hydrolytisch und/oder enzymatisch erfolgen.

Der Kationisierungsgrad der Stärke oder Cellulose wird beispielsweise mit Hilfe des Substitutionsgrades (S) angegeben. Er berechnet sich nach Gleichung (A)

$$S = N_{Am}/N_{Sac} \qquad (A)$$

worin

$N_{Am}$ für die Summe steht, die durch Addition der mittleren Zahl der Amino-Struktureinheiten pro Polysaccharidmolekül mit der mittleren Zahl der Ammonium-Struktureinheiten pro Polysaccharidmolekül gebildet wird; und

$N_{Sac}$ für die mittlere Zahl der Monosaccharid-Struktureinheiten pro Polysaccharidmolekül steht.

Der Substitutionsgrad der kationischen Stärke beträgt vorzugsweise 0,01 bis 0,5 und liegt besonders bevorzugt im Bereich von 0,02 bis 0,4. Bevorzugt eingesetzte kationische Stärken haben einen Substitutionsgrad von mindestens 0,08, insbesondere 0,08 bis 0,5, 0,08 bis 0,4 oder 0,08 bis 0,3.

Als Basis für kationische Stärken kommen beispielsweise Stärken aus Kartoffeln, Tapioka, Reis, Weizen, Mais, Sorghum und Erbsen in Betracht. Der Amylopektingehalt der Stärken kann beispielsweise 0,1 bis 100 % betragen. Ein Beispiel für eine kationische Stärke ist Percole® 134 EP mit einem Substitutionsgrad von 0,17. Besonders bevorzugt ist kationische Kartoffelstärke, die mit einem tertiären oder mit einem quaternären Amin modifiziert ist und eine Viskosität von 50 bis 200 mPas hat (gemessen in einem Brookfield-Viskosimeter bei einer Temperatur von 20°C, Spindel 2 bei einem Feststoffgehalt von 3,0 %).

In den Ausführungsformen, in denen das Ketendimer als wässrige Dispersion zur Anwendung kommt, enthält die wässrige Dispersion 1 bis 40 Gew.-%, insbesondere 5 bis 30 Gew.-% und besonders bevorzugt 10 bis 25 Gew.-% Ketendimer. Vorzugsweise enthält die wässrige Keten-Dispersion zusätzlich 2 bis 50 Gew.-%, bevorzugt 5 bis 30 Gew.-%, besonders bevorzugt 10 bis 20 Gew.-% Aluminiumsulfat, bezogen auf das Ketendimer. Vorzugsweise enthält die wässrige Dispersion zusätzlich Ligninsulfonsäure und/oder ein Kondensationsprodukt aus Napthalinsulfonsäure und Formaldehyd, wobei die Sulfonsäuregruppen gegebenenfalls teilweise in protonierter und teilweise in deprotonierter Form vorliegen können. Die wässrige Keten-Dispersion weist bevorzugt einen pH-Wert von 5 bis 9 auf. Vorzugsweise enthalten die wässrigen Keten-Dispersionen, die Aluminiumsulfat enthalten, auch mindestens eine Säure, die ausgewählt ist unter gesättigten $C_1$-$C_{10}$-Carbonsäuren, Benzolsulfonsäure, p-Toluolsulfonsäure und Mineralsäuren ($H_2SO_4$, $H_3PO_4$).

Gegebenenfalls enthalten die Ketendimer-Dispersionen , jeweils bezogen auf das Ketendimer,

(a) 5 bis 30 Gew.-% Aluminiumsulfat, und/oder
(b) 10 bis 30 Gew.-% mindestens einer wasserlöslichen kationischen Stärke, und/oder
(c) 1 bis 5 Gew.-% mindestens eines Kondensationsproduktes aus Naphthalinsulfonsäure und Formaldehyd oder einem Salz der Naphthalinsulfonsäure und Formaldehyd und/oder Ligninsulfonsäure oder ein Salz der Ligninsulfonsäure und/oder
(d) 0,5 bis 5 Gew.-% mindestens einer gesättigten Carbonsäure mit 1 bis 10 C-Atomen, Benzolsulfonsäure, p-Toluolsulfonsäure und/oder einer Mineralsäure ($H_2SO_4$, $H_3PO_4$).

Die disperse Phase der Keten-Dispersionen weist im allgemeinen einen mittleren Durchmesser von weniger als 10 μm, insbesondere weniger als 5 μm, bevorzugt weniger als 2 μm, besonders bevorzugt weniger als 1 μm, ganz besonders bevorzugt weniger als 0,5 μm auf. Gemäß einer der folgenden Ausführungsformen weist die disperse Phase der Keten-Dispersionen einen mittleren Durchmesser im Bereich von 0, 5 bis 10 μm, 0,5 bis 5 μm, 1 bis 10 μm oder 1 bis 5 μm auf. Die hier angegebenen Größen der Ketendimer-Dispersion sind gewichtsmittlere Größen, wie sie durch dynamische Lichtstreuung ermittelt werden können. Verfahren hierzu sind dem Fachmann geläufig, beispielsweise aus H. Wiese in D. Distler, Wässrige Polymerdispersionen, Wiley-VCH 1999, Kapitel 4.2.1, S. 40ff und dort zitierte Literatur sowie H. Auweter, D. Horn, J. Colloid Interf. Sci. 105 (1985) 399, D. Lilge, D. Horn, Colloid Polym. Sci. 269 (1991) 704 oder H. Wiese, D. Horn, J. Chem. Phys. 94 (1991) 6429.

Die verwendeten Ketendimere weisen einen Schmelzpunkt von ungefähr 45 - 70 °C auf. Die disperse Phase kann daher je nach Temperatur zumindest zum Teil in flüssiger Form vorliegen. Es ist vorteilhaft, wenn die Ketendimere nach dem Einarbeiten in den Gips, z.B. beim Trocknen desselben kurzzeitig (1 bis 60 min.) einer Temperatur oberhalb des Schmelzpunktes des Ketendimers ausgesetzt sind, und wieder wieder abkühlen. Im allgemeinen erfolgt die Wärmebehandlung bei einer Temperatur im Bereich von 40 bis 110 °C, insbesondere 50 bis 100 °C und bevorzugt 60 bis 90 °C.

Bevorzugt setzt man 0,1 bis 4 Gew.-%, besonders bevorzugt 0,2 bis 3 Gew.-%, ganz besonders bevorzugt 0,5 bis 2,5 Gew.-% des Ketendimers ein, bezogen auf die Masse des trockenen Gipses.

Erfindungsgemäß kann der Gips eine oder mehrere Komponenten umfassen, die ausgewählt sind unter Celluloseethern, wie Methylhydroxypropylcellulose; Löschkalk; mineralischen Additiven wie Quarzsand, Kalksteinsand, Kalksteingeröll, Kalksteinmehl und Tonminerale, wie Glimmer, Kaolinit, Crysotil, Illit, Smectit, Vermiculit, Talk, Montmorillonit, Hectorit oder Saponit; Aggregaten mit geringer Dichte, wie Perlit; Fasern, wie Cellulosefasern; Beschleunigern, wie fein gemahlenes Calciumsulfat-Dihydrat; Verdickungsmitteln wie Stärkederivaten, Guarderivaten, synthetischen Verdickungsmitteln, Polyacrylamiden und Polyvinylalkoholen; Verzögerern, wie ein Calciumsalz einer N-Polyoxymethylen-Aminosäure (Retardan P der Sika AG); Luftporenbildnern, wie Fettsäuren, Alkylsulfate und Phenylethoxylate; Schäumungsmitteln, wie Fettalkylsulfate und Fettalkylethersulfate; Antischaumadditiven, wie Siliconen; Quellmitteln, wie Schichtsilikate; Polyacrylaten; Fließmitteln, wie Ligninsulfonate, β-Naphthalinsulfonate, Melaminharze, phosphat- oder phosphonathaltige Strukturen und Polycarboxylatether; und Stabilisatoren, wie Stärke und Celluloseether.

Das erfindungsgemäße Verfahren ist insbesondere zur Behandlung von Stuckgips, Mörtelgips, Maschinengipsputz, Putzgips, Haftgips, Fugengips, Spachtelgips, Stuckgips, Isoliergips, Estrichgips, Fertigputzgips und Marmorgips geeignet.

Das erfindungsgemäße Verfahren ist zur Anwendung am Ort der Gipsverarbeitung geeignet, wie etwa auf Baustellen, in Produktionsstätten für gipshaltiger Fertigbauteile, wie Gipskartonplatten, Gipsfaserplatten, gipshaltigen Wandbauplatten und gipshaltiger Formkörper.

Die vorliegende Erfindung betrifft auch Gips, insbesondere Stuckgips, Mörtelgips, Maschinengipsputz, Putzgips, Haftgips, Fugengips, Spachtelgips, Stuckgips, Isoliergips, Estrichgips, Fertigputzgips und Marmorgips, der nach dem beschriebenen Verfahren erhältlich ist. Die vorliegende Erfindung betrifft auch gipshaltige Massen, die den nach dem erfindungsgemäßen Verfahren erhältlichen Gips umfassen. Weiter betrifft die Erfindung Fertigbauteile, die unter Verwendung des nach dem erfindungsgemäßen Verfahren hergestellten Gips oder der gipshaltigen Massen erhältlich sind.

Die vorliegende Erfindung betrifft außerdem auch die Verwendung des erfindungsgemäßen Gips oder der erfindungsgemäßen gipshaltigen Massen zur Herstellung gipshaltiger Fertigbauteile, die vorzugsweise unter Gipskartonplatten, Gipsfaserplatten, gipshaltigen Wandbauplatten und gipshaltigen Formkörpern ausgewählt sind.

Bei der Herstellung gipshaltiger Fertigbauteile, können Fasern oder eine faserhaltige Komponente mit verarbeitet werden. Dabei kann es sich um Pflanzenfasern, wie Cellulosefasern, Glasfasern, Kunststofffasern, Mineralfasern oder Metallfasern handeln. Bei der faserhaltigen Komponente kann es sich um flächige Teile, wie Karton oder Papier handeln. Die faserhaltige Komponente wird bei der Herstellung des gipshaltigen Fertigbauteils im allgemeinen zumindest an einer der Oberflächen aufgebracht oder parallel zu zumindest einer der Oberflächen eingearbeitet. Zu diesem Zweck kann man die erfindungsgemäße gipshaltige Masse auf die faserhaltige Komponente aufbringen. Dabei verwendet man vorzugsweise eine faserhaltige Komponente, die flächig verteilte mikroskopische Fasern umfasst. Eine solche faserhaltige Komponente kann z. B. überwiegend aus Papier oder Karton bestehen. Die Oberflächen der faserhaltigen Komponente können vor dem Aufbringen des Gipses vorbehandelt werden. Bevorzugt bringt man auf die gipshaltige Masse, die auf die faserhaltige Komponente aufgebracht wird, eine zweite faserhaltige Komponente auf. So wird eine dreilagige Schicht, wie z. B. in Gipskartonplatten, erhalten. Die Gipskartonplatten werden, üblicherweise in einem Trockenkanal, bei Kerntemperaturen des Gipses im Bereich von 40 bis 100 °C, insbesondere im Bereich von 60°C bis 90°C getrocknet.

Man kann die faserhaltige Komponente jedoch auch flächig in eine erfindungsgemäße gipshaltige Masse einarbeiten. Dabei verwendet man vorzugsweise eine faserhaltige Komponente, die netzartig angeordnete makroskopische Fasern umfasst. Eine solche faserhaltige Komponente kann z. B. überwiegend aus Cellulose- oder Glasfasern aufgebaut sein. So kann eine armierte Gipsschicht, wie z. B. in Gipsfaserplatten, erhalten werden.

Bei der Verwendung der erfindungsgemäßen gipshaltigen Masse zur Herstellung gipshaltiger Fertigbauteile kann man auch hydrophobierte faserhaltige Komponenten verwenden.

Beispiel 1:

Die Hydrophobierungsmitteldispersion wurde in einem Behälter mit Wasser verdünnt und zu einer Flüssigkomponente homogenisiert, so dass die in der nachfolgenden Tabelle 1 angegebenen Mengen an Hydrophobierungsmittel in 276 g Wasser enthalten, d.h. das in der Hydrophobierungsmitteldispersion enthaltene Wasser wurde berücksichtigt. Bei der Rauchgasentschwefelung gewonnenes β-Halbhydrat (400 g) wurde mit 0,04g fein gemahlenem Calciumsulfat-Dihydrat (Beschleuniger zum Einstellen einer Erstarrungszeit von ca. 2,5 min) in einem Mischer zu einer Trockenkomponente vorhomogenisiert. Die Trockenkomponente wurde in die Flüssigkomponente eingestreut. Nach 15 Sekunden Stehen wurde der erhaltene Gipsbrei mit einem Hobart-Mischer weitere 15 Sekunden bei Stufe II (285 Umdrehungen pro Minute) gerührt. Nach Befüllen eines zylinderförmigen Kunststoffbechers mit einer Höhe von 10 cm und einem Durchmesser von 8 cm mit einem Teil des Gipsbreis erfolgte die Aushärtung und Trocknung zu einem Probekörper.

Nach dem Erhärten des Probekörpers (Lagerung bei 20 °C für 15 min) wird dieser aus der Kunststoffform entfernt, 15 Minuten bei 100 °C und dann bei ca. 40°C bis zur Massenkonstanz getrocknet. Die Masse des Probekörpers ($M_T$) wurde durch Wägung bestimmt. Zur Messung der Wasseradsorption, wurde der Probekörper in einem auf 20 °C temperierten Wasserbad gelagert. Der Füllstand des Wasserbads wurde so eingestellt, dass der höchste Punkt des Probekörpers von 3 cm Wasser überdeckt wurde. Nach zweistündiger Lagerung im Wasserbad wurde der Probekörper aus dem Wasserbad genommen und überschüssiges Wasser wurde mit einem Tuch entfernt. Die Masse des Probekörpers ($M_W$) wurde erneut durch Wägung bestimmt und die Wasseraufnahme W in % nach folgender Formel bestimmt:

$$W = 100\% \times ((M_W - M_T) / M_T)$$

Tabelle 1: Wasseraufnahme von Probekörpern nach Zugabe verschiedener Hydrophobierungsmittel und verschiedenen Hydrophobierungsmittelmengen nach Beispiel 1.

| **Hydrophobierungsmittel: (Dosierung in Ma.-% bezüglich ß-Halbhydrat)** | **Sasol Hydrowax 170** | **AKD-Dispersion I** | **AKD-Dispersion II** |
|---|---|---|---|
| 0 | 27,6 % | 27,6 % | 27,6 % |
| 0,5 | 31,9% | 20,3% | 6,8% |
| 1,0 | 37,4% | 0,9% | 0,7% |
| 2,0 | 5,0 % | 0,5% | 0,4% |
| 3,0 | 0,5% | 0,3% | 0,3% |

Zusammensetzung Sasol Hydrowax 170:

Hydrowax 170 von der Fa. Sasol ist eine kommerziell erhältliche, spezielle Dispersion (ca. 37% Feststoffgehalt) für die Gipskartonplattenhydrophobierung, das aufeinander abgestimmte Wachse (u.a. Paraffinwachs) und Emulgatoren enthält und silikonfrei ist.

Zusammensetzung AKD-Dispersion I:

Wässrige Dispersion aus einem $C_{16}/C_{18}$(50:50)-Alkylketendimer, welches mit 3 Gew.-% einer kationisch modifizierten Stärke dispergiert ist (in Formel I und II: $R^1$ und $R^2$ sind $C_{14}$- bzw. $C_{16}$-Alkyl. Der mittlere Teilchendurchmesser beträgt ca. 1000 nm. Der gesamte Feststoffgehalt liegt bei ca. 24 %.

Zusammensetzung AKD-Dispersion II:

Wässrige Dispersion aus einem $C_{16}/C_{18}$(20:80)-Alkylketendimer, welches mit 3 Gew.-% einer kationisch modifizierten Stärke dispergiert ist (in Formel I und II: $R^1$ und $R^2$ sind $C_{14}$-Alkylbzw. $C_{16}$-Alkyl). Der mittlereTeilchendurchmesser beträgt ca. 1000 nm. Der gesamte Feststoffgehalt liegt bei ca. 18 %.

Tabelle 1

Aus Tabelle 1 ist ersichtlich, dass für eine geringere Wasseraufnahme als 5 Gew.-% ein Zusatz von ca. 2 Gew.-% der Wachsemulsion (Sasol Hydrowax 170) notwendig ist, während dieser Wert für die beiden erfindungsgemäßen Beispiele (AKD-Dispersion I und II) bereits bei einem Zusatz von weniger als 1 Gew.-% erreicht wird.

<u>Beispiel 2:</u>

Ein Fettalkylsulfat-basierter Schaum wurde wie folgt hergestellt: Eine 0,3%-ige Tensidlösung wurde in einem Schaumgenerator durch Rotation eines Stator-Rotor-Systems unter Zugabe von Druckluft in Schaum umgewandelt. Die erzielte Schaumdichte betrug 75g/L.

Wachsemulsion: Hydrowax 170 von der Fa. Sasol

Vergleichsversuch 2.1:

Man gab 3,0 g des Fließmittels Melflux PCE 1493 L der Fa. BASF (40 %-ige Polycarboxlatetherlösung zur Reduktion des Wasser-Gips-Wertes), , 600 g Gips (aus der Rauchgasentschwefelung gewonnenes β-Halbhydrat) und 1,3 g Beschleuniger (fein gemahlenes Calciumsulfat-Dihydrat zum Einstellen einer Erstarrungszeit von ca. 2,5 min) in 367,5 g Wasser und ließ die Mischung 15 Sekunden ruhen. Anschließend wurde mit dem Hobart-Mischer 30 Sekunden bei Stufe II (285 Umdrehungen pro Minute) gerührt und währenddessen der Fettalkylsulfat-basierte Schaum (38,6g mit einer Dichte von 75 g/L) zugemischt, bis sich eine Frischdichte des erzeugten Gipsbreis von 955 +/-10 kg/$m^3$ einstellt.

Vergleichsversuch 2.2:

Man stellte eine verdünnte Wachsemulsion her, indem man 32,4 g der 37%-igen Wachsemulsion (Sasol Hydrowax 170) in 347 g Wasser einwog. Dies entspricht 2 ma-% Wachsfeststoff bezüglich Gips. Anschließend gab man 3,0 g Melflux PCE 1493 L (Fa. BASF), 600 g Gips (aus der Rauchgasentschwefelung gewonnenes β-Halbhydrat) und 1,3 g Beschleuniger (fein gemahlenes Calciumsulfat-Dihydrat zum Einstellen einer Erstarrungszeit von ca. 2,5 min) in die verdünnte Wachsemulsion ein und ließ die Mischung 15 Sekunden ruhen. Anschließend wurde mit dem Hobart-Mischer 30 Sekunden bei Stufe II (285 Umdrehungen pro Minute) gerührt und währenddessen der Fettalkylsulfat-basierte Schaum (38,6g mit einer Dichte von 75 g/L) zugemischt, bis sich eine Frischdichte des erzeugten Gipsbreis von 955 +/-10 kg/$m^3$ einstellt.

Versuch 2.3:

Man stellte eine verdünnte AKD-Dispersion her, indem man 33,3 g der 18 %-igen AKD-Dispersion I in 340,1 g Wasser einwog. Dies entspricht 1 ma-% AKD-Feststoff bezüglich Gips. Anschließend gab man 3,0 g Melflux PCE 1493 L (Fa. BASF), 600 g Gips (aus der Rauchgasentschwefelung gewonnenes β-Halbhydrat und 1,3 g Beschleuniger (fein gemahlenes Calciumsulfat-Dihydrat; zum Einstellen einer Erstarrungszeit von ca. 2,5 min) in die wässrige Wachsemulsion und ließ die Mischung 15 Sekunden ruhen. Anschließend wurde mit dem Hobart-Mischer 30 Sekunden bei Stufe II (285 Umdrehungen pro Minute) gerührt und währenddessen der Fettalkylsulfat-basierte Schaum (38,6g mit einer Dichte von 75 g/L) zugemischt, bis sich eine Frischdichte des erzeugten Gipsbreis von 955 +/-10 kg/$m^3$ einstellt. Die Herstellung von Probekörpern aus dem Gipsbrei, die Untersuchung der Wasserabsorption und die Berechnung der Wasseraufnahme erfolgten in den Versuchen und Vergleichsversuchen des Beispiels 2, wie in Beispiel 1 beschrieben.

Die Wasseraufnahme von Probekörpern des Vergleichsversuchs 2.1 betrug 34,2 %. Die Wasseraufnahme von Probekörpern des Vergleichsversuchs 2.2 betrug 27,8 %. Die Wasseraufnahme von Probekörpern des erfindungsgemäßen Versuchs 2.3 betrug 9,6 %.

Beispiel 3:

Ein Fettalkylethersulfat-basierter Schaum wurde wie in Beispiel 2 beschrieben hergestellt.

Vergleichsversuch 3.1:

Man gab 3,0 g Melflux PCE 1493 L (Fa. BASF), 600 g Gips (aus der Rauchgasentschwefelung gewonnenes β-Halbhydrat) und 1,0 g Beschleuniger (fein gemahlenes Calciumsulfat-Dihydrat zum Einstellen einer Erstarrungszeit von ca. 2,5 min) in 354,7 g Wasser und ließ die Mischung 15 Sekunden ruhen. Anschließend wurde mit dem Hobart-Mischer 30 Sekunden bei Stufe II (285 Umdrehungen pro Minute) gerührt und währenddessen der Fettalkylethersulfat-basierte Schaum (36,5 g mit einer Dichte von 75 g/L) zugemischt, bis sich eine Frischdichte des erzeugten Gipsbreis von 970 +/- 20 kg/$m^3$ einstellt.

Versuch 3.2:

Man stellte eine verdünnte AKD-Dispersion II her, indem man 24,0 g der 25 %-igen AKD-Dispersion II in 336,7 g Wasser einwog. Man gab 3,0 g Melflux PCE 1493 L (Fa. BASF), 600 g Gips (aus der Rauchgasentschwefelung gewonnenes β-Halbhydrat) und 0,9 g Beschleuniger (fein gemahlenes Calciumsulfat-Dihydrat zum Einstellen einer Erstarrungszeit von ca. 2,5 min) in die verdünnte AKD-Dispersion II und ließ die Mischung 15 Sekunden ruhen. Anschließend wurde mit einem Hobart-Mischer 30 Sekunden bei Stufe II (285 Umdrehungen pro Minute) gerührt und währenddessen der Fettalkylethersulfat-basierte Schaum (36,5 g mit einer Dichte von 75 g/L) zugemischt, bis sich eine

Frischdichte des erzeugten Gipsbreis von 970 +/- 20 $kg/m^3$ einstellt.

Man bestimmte in Vergleichsversuch 3.1 und in Versuch 3.2 eine Minute nach Beginn des Rührens im Hobart-Mischer das Fließmass (Tabelle 2), stellte 4x4x16 $cm^3$ Prismen zur Festigkeitsuntersuchung (in Anlehnung an DIN 196-1) her. Dabei wurden die Prismen zunächst 24 Stunden bei 20°C/65% relativer Luftfeuchtigkeit in offenen Stahlformen gelagert. Nach 24 Stunden wurden sie ausgeschalt, wie in Beispiel 1 angegeben auf Massenkonstanz getrocknet und anschließend den Biegezug- und Druckprüfungen unterzogen. Die Erstarrungszeit wurde mit der Messerschnittmethode (nach DIN EN 13279-2) gemessen.

Tabelle 2: Fließmaße, Erstarrungszeiten und Festigkeitswerte geschäumter Prismen des Beispiels 3.

| Parameter | Vergleichsversuch 3.1 | Versuch 3.2 |
|---|---|---|
| Fließmass [cm] | 18,2 | 18,5 |
| Erstarrungszeit [min:s] | 2:35 | 2:40 |
| Biegezugfestigkeit [$N/mm^2$] | 1,75 | 2,03 |
| Druckfestigkeit [$N/mm^2$] | 3,74 | 4,23 |

Beispiel 3 zeigt, dass bei gleich eingestellten Dichten, Fließmaßen und Erstarrungszeiten durch Zugabe einer AKD-Dispersion auch die Festigkeitswerte erhöht werden. Bei einer Dosierung von einem Prozent AKD-Dispersion stieg sowohl die Biegezug- als auch die Druckfestigkeit um mehr als 10 % im Vergleich zur Referenzmischung.

Beispiel 4:

Die Cellulosefasern ARBOCEL® BWW 45 H sind gemäß WO 2010/112197 mit einer Menge von 2,0 - 9,0 Gew-% Alkylketendimer ($C_{16}/C_{18}$-Gemisch) hydrophobiert. Diese wurden in ein Gipsbindemittel eingearbeitet und anschließend einer Messung der Wasseraufnahme unterzogen.

Dabei wurden 400 g aus der Rauchgasentschwefelung gewonnenes β-Halbhydrat mit jeweils 2g, 4g, 12g und 24g der hydrophobierten Cellulosefasern und jeweils 0,035 g fein gemahlenem Calciumsulfat-Dihydrat (Beschleuniger zum Einstellen einer Erstarrungszeit von ca. 2,5 min) in einem Mischer zu einer Trockenkomponente vorhomogenisiert. Zudem wurde eine Referenzmischung ohne hydrophobe Fasern mit 400g Gips und 0,035g fein gemahlenem Calciumsulfat-Dihydrat angesetzt. Die Trockenkomponenten wurden jeweils in 272 g Wasser eingestreut. Nach 15 Sekunden Stehen wurde der erhaltene Gipsbrei mit einem Hobart-Mischer weitere 15 Sekunden bei Stufe II (285 Umdrehungen pro Minute) gerührt.

Das Herstellen und die Lagerung der Prüfkörper sowie die Messung der Wasseraufnahme erfolgte analog Beispiel 1.

Tabelle 3: Wasseraufnahme von Probekörpern nach Zugabe verschiedener Mengen an hydrophobierten Fasern (ARBOCEL® BWW 45 H) nach Beispiel 1.

| Hydrophobierte Cellulosefasern: (Dosierung in Ma.-% bezüglich ß-Halbhydrat) | Wasseraufnahme |
|---|---|
| 0 | 27,6% |
| 0,5 | 30,0% |
| 1,0 | 27,8% |
| 3,0 | 29,1% |
| 6,0 | 25,7% |

Aus Tabelle 3 ist ersichtlich, dass selbst bei der höchsten Zugabe an hydrophoben Cellulosefasern ARBOCEL® BWW 45 H (6 % bezüglich Gips) die Wasseraufnahme (25,7%) noch in der Nähe der Referenzmischung lag (27,6 %), welche keinerlei Fasern beinhaltete. Die Wasseraufnahme von Gips, der gemäß WO 2010/112197 hydrophobiert wurde, ist somit nicht wesentlich verringert.

## Patentansprüche

1. Verfahren zur Behandlung von Gips, wobei man den Gips mit einem Ketendimer der Formel (I),

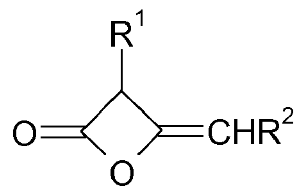

(I)

und/oder der Formel (II)

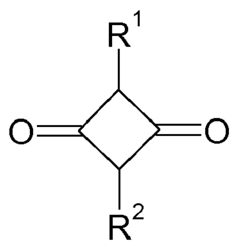

(II)

in Kontakt bringt, worin
$R^1$ und $R^2$ für gleiche oder unterschiedliche Kohlenwasserstoffreste stehen, die 10 bis 24 Kohlenstoffatome enthalten.

2. Verfahren nach Anspruch 1, wobei das Ketendimer in Form einer wässrigen Dispersion zur Anwendung kommt.

3. Verfahren nach Anspruch 2, wobei der Gips in fester Form oder in Form einer wässrigen Suspension mit der Ketendimer-Dispersion in Kontakt gebracht wird.

4. Verfahren nach einem der Ansprüche 2 oder 3, wobei die wässrige Dispersion durch ein Schutzkolloid stabilisiert ist.

5. Verfahren nach Anspruch 4, wobei das Schutzkolloid eine Stärke oder eine Cellulose ist.

6. Verfahren nach Anspruch 5, wobei das Schutzkolloid eine Stärke oder eine Cellulose ist, die durch Ammonium-Struktureinheiten modifiziert ist.

7. Verfahren nach Anspruch 6, wobei die Ammonium-Struktureinheiten gleich oder verschieden sind und der Formel (IIIa) und/oder der Formel (IIIb) entsprechen,

$-A-NR^3R^4$ (IIIa)

$$-A-\overset{\oplus}{N}R^3R^4R^5$$

(IIIb)

worin

A für verzweigtes oder unverzweigtes $C_1$-$C_4$-Alkylen steht, das gegebenenfalls durch eine oder mehrere Hydroxyl- oder Phenylgruppen substituiert ist; oder
A für $C_1$-$C_3$-Alkylen-Phenylen, Phenylen-$C_1$-$C_3$-Alkylen oder $C_1$-$C_3$-Alkylen-Phenylen-$C_1$-$C_3$-Alkylen steht, das gegebenenfalls durch eine oder mehrere Hydroxylgruppen substituiert ist; und
$R^3$, $R^4$ und $R^5$ unabhängig voneinander für verzweigtes oder unverzweigtes $C_1$-$C_4$-Alkyl, $C_2$-$C_4$-Hydroxyalkyl, Phenyl oder Phenyl-$C_1$-$C_4$-alkyl stehen und wobei $R^5$ auch für H stehen kann.

8. Verfahren nach Anspruch 7, wobei die Ammonium-Struktureinheiten gleich oder verschieden sind und der Formel

(IIIb) entsprechen, worin
A für $-CH_2-CHOH-CH_2-$, $-CH_2-CH(CH_2OH)-$ oder $-CH_2-CH_2-$ steht; und
$R^3$, $R^4$ und $R^5$ unabhängig voneinander für Methyl oder Ethyl stehen.

**9.** Verfahren nach einem der Ansprüche 2 bis 8, wobei die wässrige Dispersion 1 bis 40 Gew.-% Ketendimer enthält.

**10.** Verfahren nach einem der Ansprüche 2 bis 9, wobei die disperse Phase der wässrigen Dispersion einen mittleren Durchmesser von weniger als 10 μm aufweist, besonders bevorzugt kleiner als 5 μm.

**11.** Verfahren nach einem der vorhergehenden Ansprüche, wobei man 0,1 bis 4 Gew.-% des Ketendimers einsetzt, bezogen auf die Masse des trockenen Gipses.

**12.** Verfahren nach einem der vorhergehenden Ansprüche, wobei der Gips ausgewählt ist unter α-Halbhydrat, α/β-Halbhydrat, β-Halbhydrat, natürlichem Anhydrit, synthetischem Anhydrit, aus der Rauchgasentschwefelung erhaltenem Anhydrit, und/oder Mischungen von zwei oder mehreren davon.

**13.** Gips, erhältlich nach einem der vorhergehenden Ansprüche.

**14.** Gipshaltige Masse, umfassend den Gips nach Anspruch 13.

**15.** Fertigbauteile, umfassend den Gips nach Anspruch 13 oder die gipshaltige Masse nach Anspruch 14.

**16.** Verwendung von Gips nach Anspruch 13 oder der gipshaltige Masse nach Anspruch 14 zur Herstellung gipshaltiger Fertigbauteile, ausgewählt unter Gipskartonplatten, Gipsfaserplatten, gipshaltigen Wandbauplatten und gipshaltigen Formkörpern.

Europäisches Patentamt
European Patent Office
Office européen des brevets

# EUROPÄISCHER RECHERCHENBERICHT

Nummer der Anmeldung
EP 13 16 5467

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 470 877 A (JOHNSTONE NORMAN E [US] ET AL) 11. September 1984 (1984-09-11)<br>* Seite 1, Zeile 55 - Seite 4, Zeile 37 *<br>* Procedure A & B;<br>Seite 6, Zeile 50 - Seite 8, Zeile 44;<br>Beispiele 18--27 *<br>----- | 1-16 | INV.<br>C04B28/14 |
| A | DE 10 2005 035515 A1 (SASOL WAX GMBH [DE]) 1. Februar 2007 (2007-02-01)<br>* Absätze [0005] - [0011] *<br>* Absätze [0023] - [0040]; Ansprüche 1-18; Beispiel 1; Tabellen 1,2 *<br>----- | 1-16 | |
| A,D | WO 2010/053494 A1 (HENRY COMPANY [US]) 14. Mai 2010 (2010-05-14)<br>* Absätze [0016] - [0044]; Ansprüche 1-27; Tabellen 1-3 *<br>----- | 1-16 | |
| A | DE 196 10 995 A1 (BETZDEARBORN INC [US]) 25. September 1997 (1997-09-25)<br>* insbesondere Seite 3, Zeile 19-23;<br>Seite 1, Zeile 44 - Seite 4, Zeile 24;<br>Beispiele 1,2 *<br>----- | 6-8 | RECHERCHIERTE SACHGEBIETE (IPC)<br>C04B<br>C07C |

Der vorliegende Recherchenbericht wurde für alle Patentansprüche erstellt

1

| Recherchenort | Abschlußdatum der Recherche | Prüfer |
|---|---|---|
| Den Haag | 19. September 2013 | Büscher, Olaf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 13 16 5467

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-09-2013

| Im Recherchenbericht angeführtes Patentdokument | Datum der Veröffentlichung | Mitglied(er) der Patentfamilie | Datum der Veröffentlichung |
|---|---|---|---|
| US 4470877 A | 11-09-1984 | AU 547763 B2 | 31-10-1985 |
| | | BE 895576 A1 | 02-05-1983 |
| | | CA 1175611 A1 | 09-10-1984 |
| | | CH 661006 A5 | 30-06-1987 |
| | | DK 544482 A | 08-12-1982 |
| | | EP 0078838 A1 | 18-05-1983 |
| | | FI 830080 A | 10-01-1983 |
| | | FR 2505908 A1 | 19-11-1982 |
| | | GB 2102038 A | 26-01-1983 |
| | | IE 52660 B1 | 06-01-1988 |
| | | IT 1234413 B | 18-05-1992 |
| | | JP S58500902 A | 02-06-1983 |
| | | MX 162289 A | 22-04-1991 |
| | | NL 8220198 A | 05-04-1983 |
| | | SE 453376 B | 01-02-1988 |
| | | SE 8206986 A | 07-12-1982 |
| | | US 4372814 A | 08-02-1983 |
| | | US 4470877 A | 11-09-1984 |
| | | WO 8204014 A1 | 25-11-1982 |
| | | ZA 8203313 A | 25-05-1983 |
| DE 102005035515 A1 | 01-02-2007 | AT 442419 T | 15-09-2009 |
| | | AU 2006274324 A1 | 01-02-2007 |
| | | CA 2614395 A1 | 01-02-2007 |
| | | DE 102005035515 A1 | 01-02-2007 |
| | | DK 1907480 T3 | 04-01-2010 |
| | | EP 1907480 A1 | 09-04-2008 |
| | | US 2009194004 A1 | 06-08-2009 |
| | | WO 2007012316 A1 | 01-02-2007 |
| | | ZA 200800034 A | 25-03-2009 |
| WO 2010053494 A1 | 14-05-2010 | AU 2009313317 A1 | 14-05-2010 |
| | | CA 2742932 A1 | 14-05-2010 |
| | | CN 102209694 A | 05-10-2011 |
| | | CO 6390053 A2 | 29-02-2012 |
| | | EP 2364280 A1 | 14-09-2011 |
| | | JP 2012508156 A | 05-04-2012 |
| | | KR 20110099229 A | 07-09-2011 |
| | | US 2010116406 A1 | 13-05-2010 |
| | | WO 2010053494 A1 | 14-05-2010 |
| | | WO 2010054309 A1 | 14-05-2010 |
| DE 19610995 A1 | 25-09-1997 | AT 202811 T | 15-07-2001 |
| | | AU 723983 B2 | 07-09-2000 |
| | | AU 2156797 A | 10-10-1997 |
| | | CA 2248014 A1 | 25-09-1997 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT ÜBER DIE EUROPÄISCHE PATENTANMELDUNG NR.** EP 13 16 5467

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-09-2013

| Im Recherchenbericht angeführtes Patentdokument | Datum der Veröffentlichung | Mitglied(er) der Patentfamilie | Datum der Veröffentlichung |
|---|---|---|---|
| | | DE 19610995 A1 | 25-09-1997 |
| | | DK 888479 T3 | 08-10-2001 |
| | | EP 0888479 A1 | 07-01-1999 |
| | | ES 2160338 T3 | 01-11-2001 |
| | | JP 2000506941 A | 06-06-2000 |
| | | NO 984297 A | 17-09-1998 |
| | | NZ 331709 A | 29-04-1999 |
| | | US 6159339 A | 12-12-2000 |
| | | WO 9735068 A1 | 25-09-1997 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20100116406 A1
- US 3935021 A
- US 5437722 A
- WO 0063294 A1
- WO 9935103 A1
- DE 1223287
- US 5814411 A
- WO 2010112197 A
- WO 0228795 A
- EP 1453821 A